# EUROPÄISCHE PATENTSCHRIFT

(11) **EP 1 064 481 B1**
(45) Veröffentlichungstag und Bekanntmachung des Hinweises auf die Patenterteilung: **29.08.2001**
(21) Anmeldenummer: 99911956.3
(22) Anmeldetag: 19.03.1999
(51) Int. Cl.: F16K 11/078

(54) **MISCHBATTERIEKARTUSCHE MIT PLANSCHEIBE SCHRÄGER FÜHRUNG**
MIXING BATTERY CARTRIDGE WITH AN INCLINED PLANE DISC GUIDE
CARTOUCHE DE ROBINET MELANGEUR AVEC COMMANDE OBLIQUE DU DISQUE PLAN

(30) Priorität: 25.03.1998 HU 9800647 P
(43) Veröffentlichungstag der Anmeldung: 03.01.2001
(73) Patentinhaber: Kerox-Multipolar II. KFT., 2049 Diosd (HU)
(72) Erfinder: MAGOCSI, Tamás;, H-2213 Monorierdo (HU)
(74) Vertreter: Heim, Hans-Karl, Dipl.-Ing.
(86) Internationale Anmeldenummer: HU9900020
(87) Internationale Veröffentlichungsnummer: WO9949248

(56) Entgegenhaltungen:
- EP-A- 0 263 811
- EP-A- 0 663 551
- WO-A-94/21948
- WO-A-95/14876
- DE-A- 2 739 587
- DE-U- 29 600 364
- GB-A- 2 136 925

## Beschreibung

Der **Gegenstand der Erfindung** ist eine zur Mischbatterie für kaltes und warmes Wasser gebräuchliche Kartusche, welche Kartusche zwei, untereinander angeordnete, miteinander eine Flachdichtung bildende Steuerscheiben, und zwar eine untere Einlasscheibe und eine obere Steuerscheibe besitzt.

Für die zur Mischung des Kalt- und Warmwassers dienenden sogenannten Mischbatterien werden bereits verbreitet sogenannten Kartuschen verwendet, welche die Scheiben der keramischen Flachdichtung sowie den beweglichen Teil der Flachdichtung entsprechenderweise bewegende Elemente in einer kompletten Einheit enthalten.

Diese Kartuschen haben den Vorteil, dass einerseits die Batterie und die Kartusche nicht von demselben Hersteller erzeugt werden müssen, da der Batteriehersteller seine Batterien mit der von einem anderen Hersteller zugelieferten Kartusche durch deren einfache Einsetzung vervollständigt, d.h. funktionsfähig macht.

Ein weiterer Vorteil der heutzutage oft verwendeten Kartuschen ist, dass man sie bei ihrem Schadhaftwerden äusserst einfach wechseln kann, ohne den Wasseranschluss der Batterie freilegen zu müssen, also die Reparatur der mit Kartuschen ausgestalteten Batterien kann mit kleinerem Aufwand gelöst werden.

Eine solche Lösung ist auch in der oberbegriffsmäßige Mischbatteriekartusche der Patentbeschreibung Nr. DE 2739587 C2 enthalten.

Die in der bisherigen Praxis verwendeten Mischbatterien und Kartuschen waren so ausgestaltet, dass die Keramikscheiben der in die Batterie eingesetzten Kartusche im Verhältnis zueinander in Mittelstellung lagen, also die Steuerscheibe war aus dieser Stellung auf der Einlasscheibe in beiden Richtungen um einen gleichen Winkel, durch Zweirichtungsumdrehung des Betätigungshebels der Batterie zu verdrehen.

Falls der Benützer die Mischbatterie in dieser Lage durch Hebung des Betätigungshebels aufsperrt, so fliesst aus der Batterie Mischwasser mit Temperatur zwischen Temperatur des Wassers der Kaltwasserzuführung bzw. des Wassers der Warmwasserzuführung.

Dies bedeutet also, dass beim Aufsperren des Betätigungshebels bei dessen Mittelstellung notwendigerweise auch Warmwasserverbrauch erfolgt, unabhängig davon, ob ein Bedarf am Warmwasser vorliegt oder nicht.

Sollte natürlich der jeweilige Benützer den Betätigungshebel in die Endlage stellen, bei der aus der Mischbatterie beim Aufsperren der Batterie nur Kaltwasser fliesst, so würde dieses Problem nicht entstehen, aber die Benützer stellen den Betätigungshebel der Batterie - aus ihrem Anspruch auf Symmetrie stammend - normalerweise in die Mitte und dadurch wird der unnötige Warmwasserverbrauch vorbereitet.

Es ist eine solche Lösung bekannt, welche den Hebel der Batterie nach jedem Gebrauch automatisch in die Lage zurückstellt, in der beim Aufsperren aus der Batterie Kaltwasser fliesst, aber diese sind im allgemeinen komplizierte Konstruktionen und erfordern daher hohen Aufwand.

Die Patentbeschreibung Nr. DE 69306320 T2 gibt eine solche Lösung bekannt, bei der das Aufsperren mit Kaltwasser derart erzielt wird, dass die Batterieeinlage d.h. Kartusche herkömmlicher Gestaltung in den Aufnahmekörper der Batterie im Verhältnis zum herkömmlichen Einbau verdreht eingebaut wird.

Diese Lösung kann einerseits die Umgestaltung des Batteriekörpers notwendig machen, andererseits bedarf auch ihre Montage grösserer Aufmerksamkeit, also Arbeitsaufwand.

Das Ziel der vorliegenden Erfindung ist, durch die Ausschliessung der obigen ungünstigen Merkmale den unnötigen Warmwasserverbrauch mit geringem Aufwand zu beseitigen.

Die Aufgabe der gegenwärtigen Erfindung ist, eine solche Kartusche auszugestalten, welche an die Stelle der herkömmlichen Kartusche ohne Umgestaltung in beliebigen Batteriekörper montiert werden kann und sie sicherstellt, dass beim Aufsperren des Betätigungshebels in Mittelstellung die Batterie nur Kaltwasser liefert und der Ausfluss von Misch- bzw.
Warmwasser nur durch die Verdrehung des Betätigungshebels von der Mittelstellung möglich ist.

Die Aufgabe wird in der gegenwärtigen Erfindung durch eine zur Mischung von Flüssigkeiten - insbesondere von Kalt- und Warmwasser - dienende Mischbatteriekartusche gelöst, welche Kartusche zwei übereinander angeordnete, miteinander eine Flachdichtung bildende, zur Regelung des Mischverhältnisses und der Menge der Durchfluss-Flüssigkeiten dienende Einlasscheibe und Steuerscheibe besitzt, welche Einlasscheibe in der Kartusche fest angeordnet ist und die Steuerscheibe auf der Einlasscheibe verschoben und verdreht werden kann, wobei der Bewegungshebel, der die Planbewegung der Steuerscheibe sichert und um einen im Hebelhalter angeordneten Befestigungsstift drehbar ist, mit einem Keramikbewegungselement in Mitnehmerverbindung steht, das mit der Steuerscheibe in Mitnehmerverbindung steht, die Flächen des Keramikbewegungselementes - vorteilhaft erste Fläche des Keramikbewegungselementes und zweite Fläche des Keramikbewegungselementes - durch Führungsflächen - zweckdienlich durch die in einem Hebelhalter ausgestaltete erste Führungsfläche und durch die zweite Führungsfläche - derart geführt sind, dass der von der Verschiebungsrichtung des Keramikbewegungselementes und von der Drehachse des Bewegungshebels eingeschlossene Winkel von 90° abweicht.

Die Funktion der erfindungsgemässen Kartusche wird aufgrund der beigelegten Zeichnungen wie folgt eingehend beschrieben.

Auf den beiliegenden Zeichnungen sind
- die Figur 1.: die Seitenansicht einer Ausführungsform der erfindungsgemässen Kartusche,
- die Figur 2.: der Aufsichtsschnitt einer Ausführungsform der erfindungsgemässen Kartusche in Mittelstellung des Bewegungshebels,
- die Figur 3.: der Aufsichtsschnitt einer Ausführungsform der erfindungsgemässen Kartusche in aufgesperrter Lage in Mittelstellung des Bewegungshebels

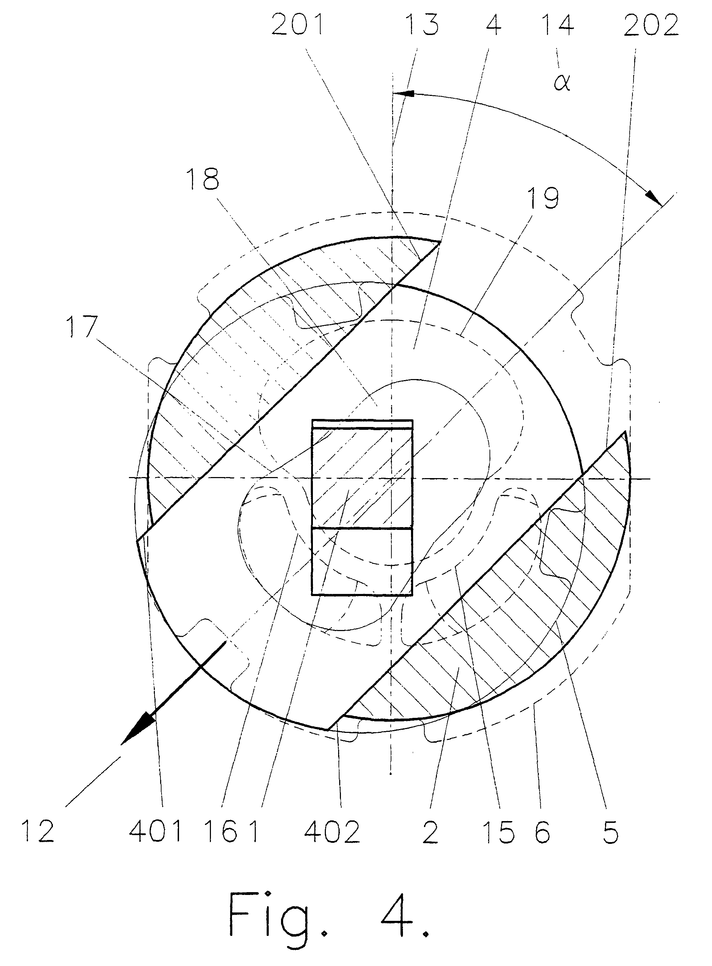

- die Figur 4.: der Aufsichtsschnitt einer Ausführungsform der erfindungsgemässen Kartusche in aufgesperrter Lage, in verdrehtem Zustand des Hebels und

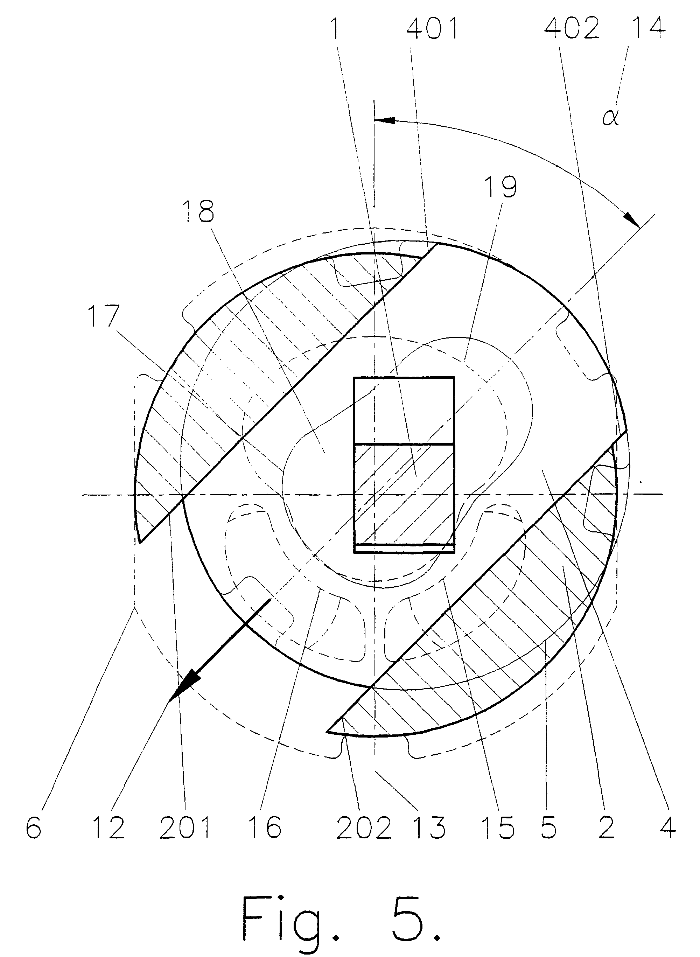

- die Figur 5.: der Aufsichtsschnitt einer Ausführungsform der erfindungsgemässen Kartusche in zugesperrter Lage, in verdrehtem Zustand des Bewegungshebels

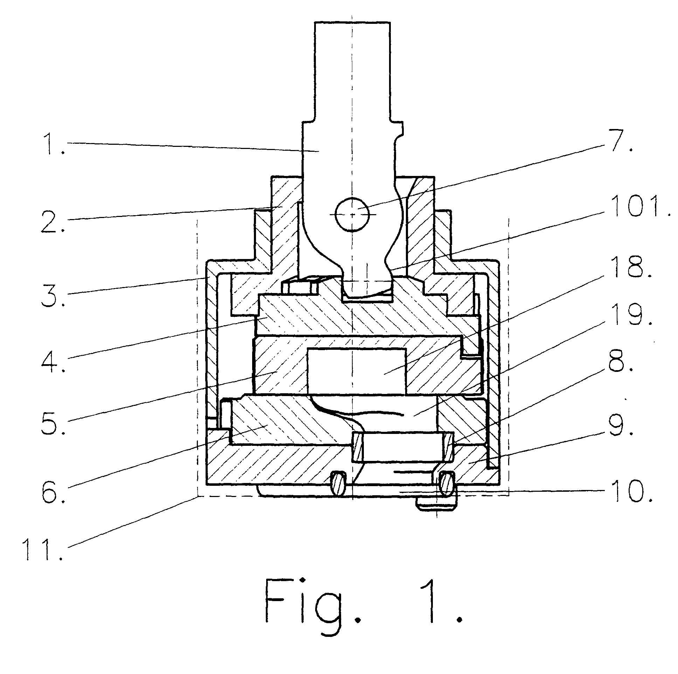

Die Seitenansicht der dargestellten Ausführungsform der erfindungsgemässen Kartusche wird aufgrund der Figur 1. beschrieben. Im Gehäuse 3 unten ist die zum Kalt- und Warmwassereinlass und zum Mischwasserauslass dienende Einlasscheibe 6 angeordnet, wobei der Wasserraum von der Umgebung durch Abdichtungsgummi 8 getrennt ist.

Im Batteriekörper 11 ist zur Isolierung des durch die Kartusche strömenden Wassers die Dichtung 10 für Abdichtung des Gehäuses angeordnet.

Über der Einlasscheibe 6 - daran auf einer ebenen Fläche beweglich - ist die Steuerscheibe 5 angeordnet, durch deren Verdrehung das Mischverhältnis des Kalt- und Warmwassers und durch ihre Verschiebung die Auslassmenge zu regeln bzw. zuzusperren ist. Die Steuerscheibe 5 und die Einlasscheibe 6 bilden miteinander eine Flachdichtung, die sich aufeinander verschiebenden Flächen sind poliert.

Die Steuerscheibe 5 steht mit dem Keramikbewegungselement 4 in Mitnehmerverbindung und dieses mit einem Bewegungshebel 1 in Mitnehmerverbindung.

Der Bewegungshebel 1 ist im Hebelhalter 2 durch den Befestigungsstift 7 drehbar gelagert. Der Hebelhalter 2 ist samt dem darin durch den Befestigungsstift 7 befestigten Bewegungshebel 1 im Kartuschengehäuse 3 um die Symmetrieachse des Kartuschengehäuses verdrehbar angeordnet.

Am Unterteil des Bewegungshebels 1 ist zur Vermittlung der Mitnehmerverbindung zwischen dem Bewegungshebel 1 und dem Keramikbewegungselement 4 eine Zylinderfläche 101 ausgestaltet.

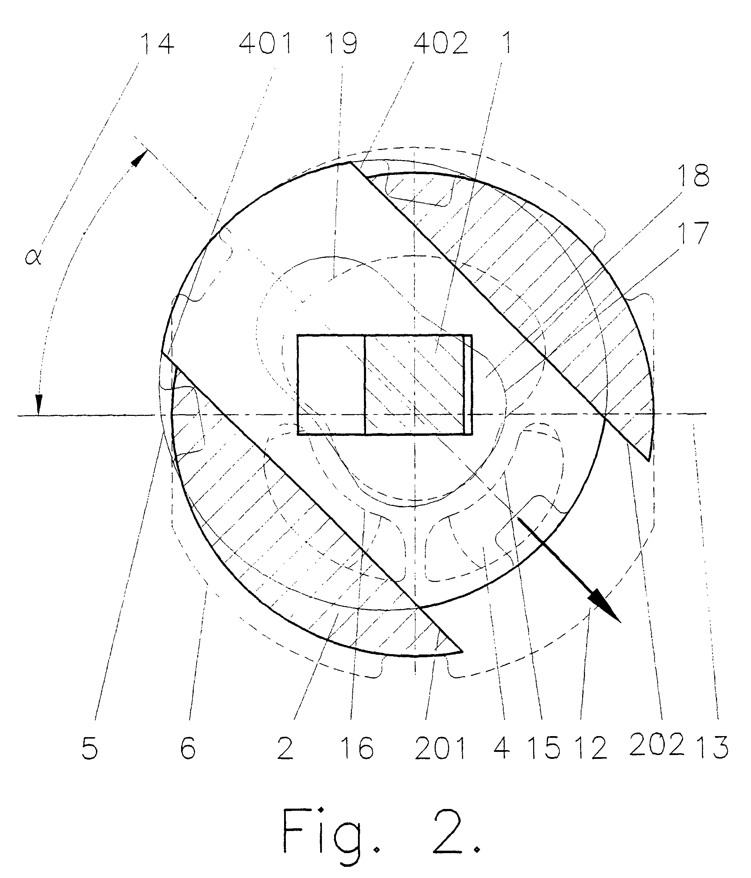

Auf den Figuren 2.-4. sind die Schnitte des Bewegungshebels 1, des Hebelhalters 2 und des Keramikbewegungselementes 4 zu sehen weiters die die Flachdichtung bildenden Steuerscheibe 5 und Einlasscheibe 6 mit Strichellinie dargestellt.

Die jeweilige Bewegung, also Verdrehung und Verschiebung der Steuerscheibe 5 entspricht der Bewegung des Keramikbewegungselementes 4.

In der Einlasscheibe 6 sind Kaltwasser-Einlassöffnung 15, Warmwasser-Einlassöffnung 16 weiters Mischwasser-Auslassöffnung 19 ausgestaltet.

In der Steuerscheibe 5 ist eine Überbrückungskammer 18 ausgestaltet, deren in die Richtung der Kaltwasser-Einlassöffnung 15 und Warmwasser-Einlassöffnung 16 zu fallender Flansch die Steuerkante der Steuerscheibe 17 bildet.

In der Lage gemäss der Figur 2. ist die Einlasscheibe 6 spiegelsymmetrisch auf die Verschiebungsrichtung des Bewegungshebels 1 angeordnet bzw. ausgestaltet und die Steuerscheibe 5 ist auf die Verschiebungsrichtung des Keramikbewegungselementes 12 des Keramikbewegungselementes 4 spiegelsymmetrisch angeordnet beziehungsweise ausgestaltet.

(In herkömmlichem Falle, in Grundlage fallen die Richtung der Spiegelsymmetrieachse des Keramikbewegungselementes 4 und der Steuerscheibe 5 zusammen und stimmen mit der Verschiebungsrichtung des Bewegungshebels 1 überein.)

Gemäss der Figur 2. sind auf dem Keramikbewegungselement 4 eine erste Fläche des Keramikbewegungselementes 401 und eine zweite Fläche des Keramikbewegungselementes 402 ausgestaltet, die auf der im Hebelhalter 2 ausgestalteten ersten Führungsfläche 201 bzw. zweiten Führungsfläche 202 geführt sind.

Wenn der Oberteil des Bewegungshebels 1 in Aufsperrichtung bewegt wird, verschiebt sich sein Teil unter dem Befestigungsstift 7 in entgegengesetzte Richtung - auf der Figur 2. nach unten - auch das Keramikbewegungselement 4 nach unten verschiebend.

Bei der Bewegung des Bewegungshebels 1 verschiebt sich die Zylinderfläche auf dem Bewegungshebel 101 im Keramikbewegungselement 4 in Richtung der Achse des Befestigungsstiftes 7, es ist daher für sie eine angemessene Anpassungsbahn zu sichern. Die auf die Achse des Befestigungsstiftes 7 senkrechte Komponente der Bewegung wird durch die Verdrehung des Bewegungshebels 1 um den Befestigungsstift 7 gewährt.

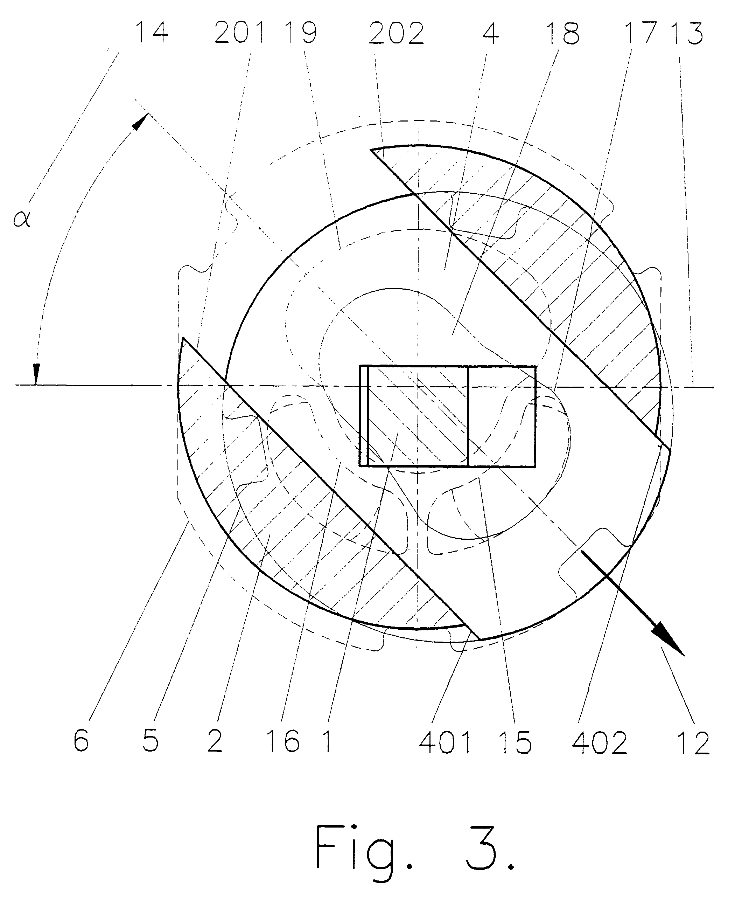

Die Verschiebungsrichtung des Keramikbewegungselementes 4 weicht jedoch von der Bewegungsrichtung des Bewegungshebels 1 im Masse des von der Verschiebungsrichtung des Keramikbewegungselementes und der Drehachse (13) des Bewegungshebels einschlossenen Winkels 14 ab, weil sich die erste Fläche des Keramikbewegungselementes 401 auf erster Führungsfläche 201 des Hebelhalters 2 verschiebt und so sich das Keramikbewegungselement 4 in Verschiebungsrichtung des Keramikbewegungselementes 12 bewegt, währenddem sich die Relativlage des Bewegungshebels 1 und des Keramikbewegungselementes 4 in der Weise gemäss der Figur 3. verändert.

Durch die Verschiebung des Keramikbewegungselementes 4 veranlasst, deren Ausmass von der Verschiebung des Bewegungshebels 1 bestimmt ist, überbrückt die in der Steuerscheibe 5 ausgestaltete Überbrückungskammer 18 die in der Einlasscheibe 6 ausgestaltete Kaltwasser-Einlassöffnung 15 und die Mischwasser-Auslassöffnung 19, auf diese Weise fliesst also durch die Ausflussöffnung der die Kartusche aufnehmenden Batterie kaltes Wasser aus.

Es ist wiederholt zu betonen, dass der Bewegungshebel 1 in dieser Lage in Mittelstellung steht, die Menge des ausströmenden Kaltwassers wird durch das Ausmass der Verdrehung des Bewegungshebels 1 in senkrechter Ebene bestimmt.

Der Benützer sperrt also die Mischbatterie in Grundlage immer mit kaltem Wasser auf. Zur Gewinnung von Misch- oder Warmwasser hat der Benützer den Bewegungshebel 1 bzw. den angeschlossenen Betätigungshebel der Batterie bewusst zu verdrehen. In von der Verdrehung des Bewegungshebels 1 abhängigem Masse verbindet die in der Steuerscheibe 5 ausgestaltete Überbrückungskammer 18 die Warmwasser-Einlassöffnung 16 in je grösserem Masse mit der gleichfalls in der Einlasscheibe 6 ausgestalteten Mischwasser-Auslassöffnung 19.

Dementsprechend gerät also in die Überbrückungskammer gleicherweise kaltes und warmes Wasser, die sich dort gemischt durch die Mischwasser-Auslassöffnung 19 austreten.

Der Bewegungshebel 1 sowie der diesem angeschlossene Hebelhalter 2 und das Keramikbewegungselement 4 können auch in dem Masse verdreht werden, dass die Überbrückung zwischen der in der Einlasscheibe 6 ausgestalteten Kaltwasser-Einlassöffnung 15 und der Mischwasser-Auslassöffnung 19 aufhört, weil der Planteil der Steuerscheibe 5 die in der Einlasscheibe 6 ausgestaltete Kaltwasser-Einlassöffnung 15 verschliesst. In diesem Falle kann die in der Steuerscheibe 5 ausgestaltete Überbrückungskammer 18 ausschliesslich zwischen der in der Einlasscheibe 6 ausgestalteten Warmwasser-Einlassöffnung 16 und der gleichfalls in der Einlasscheibe 6 ausgestalteten Mischwasser-Auslassöffnung 19 in dem Masse der Verdrehung des Bewegungshebels 1 in senkrechter Ebene Überbrückung zustande bringen.

In diesem Falle weicht dagegen die Lage des Bewegungshebels 2 von der Mittelstellung ab, also das Aussehen der Batterie wird nach dem Zusperren des Warmwassers asymmetrisch, so kann man aufgrund der Erfahrungen rechtlich darauf rechnen, dass der Benützer den Bewegungshebel beziehungsweise den diesem angeschlossenen Betätigungshebel der Batterie in symmetrische Grundlage zurückdreht.

So kann der folgende Funktionszyklus wiederholt mit Aufsperren mit kaltem Wasser beginnen.

Die beiden Verdrehungen um die Achse sind voneinander unabhängig, so kann beliebige Variation der Lage der Steuerscheiben im Verhältnis zueinander hergestellt werden, die Kartusche kann daher in beliebig gewählter Lage, nach dem Bedarf an Wassermenge und -temperatur benützt werden.

Den Bewegungshebel 1 der Kartusche aus der Lage gemäss der Figur 2. um die Symmetrieachse des Gehäuses 3 der Kartusche verdreht bleibt die Kartusche immer in geschlossenem Zustand.

Die Zweirichtungsumdrehung des Bewegungshebels 1 der Kartusche ist durch die in der Kartusche angeordneten Stossflächen begrenzt.

Die Kaltwasser-Einlassöffnung 15 und Warmwasser-Einlassöffnung 16 können gegeneinander vertauscht werden, dann wird die Funktion der Kartusche durch die Vertauschung der Kalt- und Warmwasserseite geändert.

Ein Vorteil der erfindungsgemässen Batteriekartusche ist, dass ihre mit den herkömmlichen Kartuschen vollkommen austauschgerechte einfache Mechanik beträchtliche Warmwasserersparung zur Folge hat und so ihre Benützung aus Sicht des Umweltschutzes und der Energieersparung günstig ist.

Der Schutzumfang der erfindungsgemässen Lösung beschränkt sich selbstverständlich nicht auf das obige Ausführungsbeispiel, sondern er schliesst alle - für einen Fachmann offenbaren - Modifikationen und Änderungen innerhalb des Schutzumfanges des Patentanspruches 1. ein.

## Patentansprüche

1. Mischbatteriekartusche für Mischung von Kalt- und Warmwasser, welche Kartusche zwei, übereinander angeordnete, miteinander eine Flachdichtung bildende, zur Regelung des Mischverhältnisses und der Menge der Durchfluss-Flüssigkeiten dienende Scheiben (5, 6), eine Einlasscheibe (6) und eine Steuerscheibe (5) hat, welche Einlasscheibe (6) in der Kartusche befestigt ist, und die Steuerscheibe (5) auf der Einlasscheibe (6) verschoben und verdreht werden kann, wobei: der die Planbewegung der Steuerscheibe (5) gewährende Bewegungshebel (1) - der sich um einen im Hebelhalter (2) angeordneten Befestigunsstift (7) verdrehen kann - mit einem Keramikbewegungselement (4) in Mitnehmerverbindung ist; das Keramikbewegungselement (4) mit der Steuerscheibe (5) in Mitnehmerverbindung steht; und die Flächen des Keramikbewegungselementes (4) - vorteilhaft eine erste Fläche (401) des Keramikbewegungselementes (4) und eine zweite Fläche (402) des Keramikbewegungselementes (4) - durch Führungsflächen - vorteilhaft durch die im Hebelhalter (2) ausgestaltete erste Führungsfläche (201) und zweite Führungsfläche (202) - geführt sind ; **dadurch gekennzeichnet** daß das Keramikbewegungselement (4) derart geführt wird dass der von der Verschiebungsrichtung (12) des Keramikbewegungselementes (4) und der Drehachse (13) des Bewegungshebels (1) eingeschlossene Winkel von 90 ° abweicht.

## Claims

1. Mixing battery cartridge for mixing hot and cold water, said cartridge having two superimposed disks (5, 6) forming a flat gasket and used for regulating the mixing ratio and the flow liquid quantity, namely an inlet disk (6) and a control disk (5), said inlet disk (6) being fixed in the cartridge and the control disk (5) can be slid onto and turned on the inlet disk (6), in which the movement lever (1) allowing the planar movement of the control disk (5) and which can rotate about a fixing pin (7) located in the lever holder (2), is in driving connection with a ceramic moving element (4), which is in driving connection with the control disk (5); and the surfaces of the ceramic moving element (4), advantageously a first surface (401) of the ceramic moving element (4) and a second surface (402) of the ceramic moving element (4), are guided by guide surfaces, advantageously by the first guide surface (201) and second guide surface (202) in the lever holder (2),
**characterized in that,**
the ceramic moving element (4) is guided in such a way that the angle formed by the sliding direction (12) of the ceramic moving element (4) and the turning axis (13) of the movement lever (1) differs from 90°.

## Revendications

1. Cartouche de robinet mélangeur pour mélanger de l'eau froide et de l'eau chaude, laquelle cartouche a deux disques superposés (5, 6), un disque d'admission (6) et un disque de commande (5), formant l'un avec l'autre un joint étanche plat et servant à réguler le rapport de mélange et la quantité de liquide distribuée, lequel disque d'admission (6) est fixé dans la cartouche et le disque de commande (5) peut être déplacé et tourné sur le disque d'admission (6), dans laquelle: le levier de déplacement (1) assurant le mouvement plan du disque de commande (5) - levier qui peut tourner autour d'une broche de fixation (7) placée dans le support (2) de levier - est en liaison d'entraînement avec un élément de déplacement (4) en céramique; l'élément de déplacement (4) en céramique est en liaison d'entraînement avec le disque de commande (5); et les surfaces de l'élément de déplacement (4) en céramique - de préférence une première surface (401) de l'élément de déplacement (4) en céramique et une deuxiéme surface (402) de l'élément de déplacement (4) en céramique - sont guidées par des surfaces de guidage - de préférence par la première surface de guidage (201) formée dans le support (2) de levier et par la deuxième surface de guidage (202) -;
**caractérisée en ce que**
l'élément de déplacement (4) en céramique est guidé de telle manière que l'angle inscrit entre la direction de déplacement (12) de l'élément de déplacement (4) en céramique et l'axe de rotation (13) du levier de déplacement (1) s'écarte de 90°.
